(19) Europäisches Patentamt / European Patent Office / Office européen des brevets

(11) **EP 2 495 297 A1**

(12) **EUROPEAN PATENT APPLICATION**
published in accordance with Art. 153(4) EPC

(43) Date of publication:
05.09.2012 Bulletin 2012/36

(51) Int Cl.:
$C09K\ 3/10^{(2006.01)}$    $C08F\ 2/44^{(2006.01)}$
$C08J\ 3/12^{(2006.01)}$    $C08L\ 101/14^{(2006.01)}$
$G02B\ 6/44^{(2006.01)}$    $H02G\ 3/22^{(2006.01)}$

(21) Application number: 10826277.5

(22) Date of filing: 12.10.2010

(86) International application number:
PCT/JP2010/006051

(87) International publication number:
WO 2011/052140 (05.05.2011 Gazette 2011/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 30.10.2009 JP 2009251148

(71) Applicant: Sanyo Chemical Industries, Ltd.
Kyoto-shi, Kyoto 605-0995 (JP)

(72) Inventors:
• MATSUMOTO, Yoshimasa
Kyoto-shi
Kyoto 605-0995 (JP)
• KOBAYASHI, Yuka
Kyoto-shi
Kyoto 605-0995 (JP)
• NANRI, Takeshi
Kyoto-shi
Kyoto 605-0995 (JP)
• KISHI, Masanori
Kyoto-shi
Kyoto 605-0995 (JP)

(74) Representative: Wilhelms · Kilian & Partner
Patentanwälte
Eduard-Schmid-Straße 2
81541 München (DE)

(54) **ABSORBENT RESIN PARTICLES FOR WATER-STOPPING TAPE, AND WATER-STOPPING TAPE CONTAINING SAME**

(57) An object of the present invention is to provide absorbent resin particles for a water-stopping tape which are superior in absorption rate even when their average particle size is smaller or when their particle size distribution is wider. The present invention relates to absorbent resin particles for a water-stopping tape comprising a crosslinked polymer (A1) comprising a water-soluble vinyl monomer (a1) and/or a hydrolyzable vinyl monomer (a2) and a crosslinking agent (b) as essential constitutional units, wherein a hydrophobic substance (C) is present inside the absorbent resin particles in an amount of from 0.01 to 10.0% by weight relative to the weight of (A1) and (C) is present on the surface of the absorbent resin particles in an amount of from 0.001 to 1.0% by weight relative to the weight of (A1).

EP 2 495 297 A1

**Description**

TECHNICAL FIELD

The present invention relates to absorbent resin particles for a water-stopping tape, and a water-stopping tape containing the same.

BACKGROUND ART

Water-stopping tapes absorb water and aqueous solutions of salt such as sea water that have entered into cables and the like, so that they prevent the degradation of the inside of the cables and the like.

As an absorbent resin to be used for a water-stopping tape, a neutralized product of a starch-acrylic acid graft polymer (Patent Document 1), a partially neutralized product of poly(acrylic acid) (Patent Document 2), a copolymer of an amino group-containing water-soluble ethylenically unsaturated monomer-a partially neutralized product of acrylic acid (Patent Document 3), and the like are known.

These absorbent resins, however, are low in absorbability, especially in absorption rate, and therefore they are not necessarily satisfactory in performance. Use of such absorbent resins for water-stopping tapes results in low absorption rate of water, sea water, and the like and has a problem that it will cause degradation of the inside of cables and the like .

On the other hand, it is known that an absorbent resin for a water-stopping tape superior in absorption rate can be obtained by sharpening the particle size distribution of conventional absorbent resins at a specific particle size distribution. This is for the reason that absorbent resins having a particle size other than a specific particle size will be low in absorption rate because an excessively large particle size will result in a small surface area and an excessively small particle size will cause a blocking phenomenon. In view of production efficiency, however, it is difficult to sharpen the particle size distribution.

PRIOR ART DOCUMENTS

PATENT DOCUMENTS

Patent Document 1: JP 51-125468 A
Patent Document 2: JP 62-172006 A
Patent Document 3: JP 2002-30270 A

SUMMARY OF THE INVENTION

PROBLEMS TO BE SOLVED BY THE INVENTION

An object of the present invention is to provide absorbent resin particles for a water-stopping tape which are superior in absorption rate.

Another object of the present invention is to provide absorbent resin particles for a water-stopping tape which are superior in absorption rate even when their average particle size is small or when their particle size distribution is wide.

MEANS FOR SOLVING THE PROBLEMS

As a result of earnest investigations for achieving the above-mentioned objects, the inventors accomplished the present invention by finding that the objects can be achieved by such absorbent resin particles that a hydrophobic substance is present in a specific amount inside the absorbent resin particles and the hydrophobic substance is present in a specific amount on the surface of the absorbent resin particles.

That is, the gist of the absorbent resin particles for a water-stopping tape of the present invention is to comprise a crosslinked polymer (A1) comprising a water-soluble vinyl monomer (a1) and/or a hydrolyzable vinyl monomer (a2) and a crosslinking agent (b) as essential constitutional units, wherein a hydrophobic substance (C) is present inside the absorbent resin particles in an amount of from 0.01 to 10.0% by weight relative to the weight of (A1) and (C) is present on the surface of the absorbent resin particles in an amount of from 0.001 to 1.0% by weight relative to the weight of (A1).

Moreover, the gist of the water-stopping tape of the present invention is to contain the above-mentioned absorbent resin particles.

EFFECT OF THE INVENTION

The absorbent resin particles for a water-stopping tape of the present invention exhibit a high absorption rate of water, sea water, and the like and are superior in absorption rate even when their average particle size is small or when their particle size distribution is wide.

Moreover, a water-stopping tape containing the absorbent resin particles for a water-stopping tape of the present invention is superior in absorption rate and can exhibit an effect that it can quickly absorb water, sea water, and the like having entered into cables and the like and thereby can prevent the degradation of the inside of the cables and the like.

MODE FOR CARRYING OUT THE INVENTION

The water-soluble vinyl monomer (a1) is not particularly limited and publicly known {e.g., Japanese Patent No. 3648553, JP 2003-165883 A, JP 2005-75982 A, and JP 2005-95759 A} vinyl monomers and the like can be used.

The hydrolyzable vinyl monomer (a2) means a vinyl monomer that turns into the water-soluble vinyl monomer (a1) by hydrolysis; it is not particularly limited and publicly known {e.g., Japanese Patent No. 3648553, JP 2003-165883 A, JP 2005-75982 A, and JP 2005-95759 A} vinyl monomers and the like can be used. The water-soluble vinyl monomer means a vinyl monomer having a property that at least 100 g of the monomer can be dissolved in 100 g of water of 25°C. Hydrolyzability means a property that a substance is hydrolyzed by the action of water of 50°C and, as necessary, a catalyst (e.g., acid or base), thereby becoming water-soluble. Although the hydrolysis of the hydrolyzable vinyl monomer may be carried out during polymerization, after polymerization, or both during and after polymerization, after polymerization is preferred from the viewpoint of the molecular weight of absorbent resin particles to be obtained, etc.

Among these, the water-soluble vinyl monomer (a1) is preferred from the viewpoint of absorption characteristics, etc., anionic vinyl monomers are more preferred, vinyl monomers having a carboxy (salt) group, a sulfo (salt) group, an amino group, a carbamoyl group, an ammonio group, or a mono-, di- or tri-alkylammonio group are still more preferred, vinyl monomers having a carboxy (salt) group or a carbamoyl group are even more preferred, (meth)acrylic acid (salt) and (meth)acrylamide are particularly preferred, (meth)acrylic acid (salt) is further particularly preferred, and acrylic acid (salt) is most preferred.

The "carboxy (salt) group" means a "carboxyl group" or a "carboxylate group", and the "sulfo (salt) group" means a "sulfo group" or a "sulfonate group." The (meth)acrylic acid (salt) means acrylic acid, a salt of acrylic acid, methacrylic acid, or a salt of methacrylic acid and the (meth)acrylamide means acrylamide or methacrylamide. Examples of such salts include salts of alkali metals (lithium, sodium, potassium, etc.), salts of alkaline earth metals (magnesium, calcium, etc.), and ammonium ($NH_4$) salts. Among these salts, salts of alkali metals and ammonium salts are preferred from the viewpoint of absorption characteristics, etc., salts of alkali metals are more preferred, and sodium salts are particularly preferred.

When either of the water-soluble vinyl monomer (a1) and the hydrolyzable vinyl monomer (a2) is contained as a constitutional unit, a single kind of the monomer may be contained as a constitutional unit or, alternatively, two or more kinds of the monomer may be contained as constitutional units as necessary. The same is also applied to the case where both the water-soluble vinyl monomer (a1) and the hydrolyzable vinyl monomer (a2) are contained as constitutional units. When both the water-soluble vinyl monomer (a1) and the hydrolyzable vinyl monomer (a2) are contained as constitutional units, their content molar ratio (a1/a2) is preferably from 75/25 to 99/1, more preferably from 85/15 to 95/5, particularly preferably from 90/10 to 93/7, and most preferably from 91/9 to 92/8. When the ratio is within such ranges, absorption performance is further improved.

In addition to the water-soluble vinyl monomer (a1) and the hydrolyzable vinyl monomer (a2), the absorbent resin particles can contain an additional vinyl monomer (a3) copolymerizable with these vinyl monomers as a constitutional unit.

The additional copolymerizable vinyl monomer (a3) is not particularly limited and publicly known {e.g., Japanese Patent No. 3648553, JP 2003-165883 A, JP 2005-75982 A, and JP 2005-95759 A} hydrophobic vinyl monomers and the like can be used; for example, the following vinyl monomers (i) to (iii) can be used.

(i) Aromatic ethylenic monomers having 8 to 30 carbon atoms
Styrenes, such as styrene, α-methylstyrene, vinyltoluene, and hydroxystyrene, and vinylnaphthalene , and halogen-substituted styrenes, such as dichlorostyrene, etc.
(ii) Aliphatic ethylene monomers having 2 to 20 carbon atoms
Alkenes [e.g., ethylene, propylene, butene, isobutylene, pentene, heptene, diisobutylene, octene, dodecene, and octadecene] ; and alkadienes [e.g., butadiene and isoprene], etc.
(iii) Alicyclic ethylene monomers having 5 to 15 carbon atoms
Monoethylenically unsaturated monomers [e.g., pinene, limonene, and indene] ; and polyethylenic vinyl polymerizable monomers [e.g., cyclopentadiene, bicyclopentadiene, and ethylidene norbornene], etc.

When the additional vinyl monomer (a3) is contained as a constitutional unit, the content (mol%) of the additional vinyl monomer (a3) unit, based on the molar number of the water-soluble vinyl monomer (a1) unit and the hydrolyzable vinyl monomer (a2) unit, is preferably from 0.01 to 5, more preferably from 0.05 to 3, even more preferably from 0.08 to 2, and particularly preferably from 0.1 to 1.5. From the viewpoint of absorption characteristics, etc., it is most preferred that the content of the additional vinyl monomer (a3) unit be 0 mol%.

The crosslinking agent (b) is not particularly limited and publicly known {e.g., Japanese Patent No. 3648553, JP 2003-165883 A, JP 2005-75982 A, and JP 2005-95759 A} crosslinking agents and the like can be used. Among these, from the viewpoint of absorption characteristics, etc., crosslinking agents having two or more ethylenically unsaturated groups are preferred, poly(meth)allyl cyanurate and poly(meth)allyl ethers of polyols having 2 to 10 carbon atoms are more preferred, triallyl cyanurate, triallyl isocyanurate, methylenebisacrylamide, trimethylolpropane triacrylate, tetraallyloxyethane, trimethylolpropane diaryl ether, and pentaerythritol triallyl ether are particularly preferred, and pentaerythritol triallyl ether is most preferred.

From the viewpoint of the absorbability of the absorbent resin particles, the proportion of the crosslinking agent (b) that constitutes the crosslinked polymer (A1) is preferably from 0.05 to 1% by weight, more preferably from 0.1 to 0.8% by weight, and particularly preferably from 0.1 to 0.6% by weight, relative to the total weight of the water-soluble vinyl monomer (a1) and the hydrolyzable vinyl monomer (a2), and (b).

The crosslinked polymer (A1) may be of a single kind and also may be a mixture of two or more kinds thereof.

The crosslinked polymer (A1) can be produced in the same way as publicly known aqueous solution polymerization {heat insulation polymerization, thin film polymerization, and spray polymerization methods, etc.; e.g., JP 55-133413 A} or publicly known reversed-phase suspension polymerization {e.g., JP 54-30710 B, JP 56-26909 A, and JP 1-5808 A}. Among polymerization methods, a solution polymerization method is preferred, and an aqueous solution polymerization method is particularly preferred because it does not require to use an organic solvent or the like and it therefore is advantageous in terms of production cost.

A hydrous gel to be produced by polymerization {composed of a crosslinked polymer and water} maybe chopped as necessary. The size (longest diameter) of the gel after chopping is preferably from 50 μm to 10 cm, more preferably from 100 μm to 2 cm, and particularly preferably from 1 mm to 1 cm. When the size is within such ranges, dryability during a drying step is further improved.

Chopping can be carried out by a publicly known method by using an ordinary chopping apparatus {e.g., a Bex Mill, a rubber chopper, a Pharma Mill, a mincing machine, an impact type pulverizer, or a roll type pulverizer}, etc .

When a solvent (an organic solvent, water, etc.) is used for polymerization, it is preferred to distill off the solvent after the polymerization. When an organic solvent is contained in the solvent, the content (% by weight) of the organic solvent after distillation, based on the weight of the absorbent resin particles, is preferably from 0 to 10, more preferably from 0 to 5, particularly preferably from 0 to 3, and most preferably from 0 to 1. When the content is within such ranges, absorption performance of the absorbent resin particles is further improved.

When water is contained in the solvent, the content (% by weight) of water after distillation, based on the weight of the crosslinked polymer, is preferably from 0 to 20, more preferably from 1 to 17, particularly preferably from 2 to 14, and most preferably from 3 to 11. When the content is within such ranges, absorption performance and breakability of the absorbent resin particles after drying are further improved.

The contents of an organic solvent and water can be determined from the weight loss of a measurement sample before and after heating when the sample is heated with an infrared moisture content analyzer {e.g., JE400 manufactured by Kett Electric Laboratory; 120 ± 5°C, 30 minutes, atmosphere humidity before heating 50 ± 10%RH, lamp specification: 100 V, 40 W}.

As a method of distilling off a solvent (containing water), a method of distilling off (drying) the solvent with hot blast having a temperature of from 80 to 230°C, a thin film drying method using, e.g., a drum dryer heated to 100 to 230°C, a (heating) reduced pressure drying method, a freeze drying method, a drying method using infrared radiation, decantation, filtration, etc. can be applied.

The crosslinked polymer can be pulverized after drying. The method of pulverization is not particularly limited; ordinary pulverizing apparatuses {e.g., a hammer type pulverizer, an impact type pulverizer, a roll type pulverizer, and a jet stream type pulverizer} and the like can be used. The pulverized crosslinked polymer can be adjusted in its particle size by screening, etc. if necessary.

The weight average particle diameter (μm) of the crosslinked polymer (A1) when having been screened as necessary is preferably from 10 to 800, more preferably from 30 to 700, even more preferably from 50 to 600, particularly preferably from 70 to 500, and most preferably from 90 to 450. When the weight average particle diameter is within such ranges, absorption performance is further improved.

The weight average particle diameter is measured by the method disclosed in Perry's Chemical Engineers' Handbook, Sixth Edition (McGraw-Hill Book Company, 1984, page 21) by using a RO-TAP test sieve shaker and standard sieves (JIS Z8801-1:2006). That is, JIS standard sieves are combined, for example, in the order of 850 μm, 710 μm, 500 μm, 300 μm, 250 μm, 212 μm, 150 μm, 106 μm, 75 μm, 45 μm, and a bottom tray from the top. About 50 g of particles to be measured are put on the top sieve and then shaken for 5 minutes by a RO-TAP test sieve shaker. Then, the particles received on the respective sieves and the bottom tray are weighed and the weight fractions of the particles on the respective sieves are calculated with the total weight of the particles regarded as 100% by weight. The calculated values are plotted on a logarithmic probability sheet {taking the size of openings of a sieve (particle diameter) as abscissa and the weight fraction as ordinate} and then a line connecting respective points is drawn. Subsequently, a particle diameter that corresponds to a weight fraction of 50% by weight is determined and this is defined as a weight average particle diameter.

The apparent density (g/ml) of the crosslinked polymer (A1) is preferably from 0.45 to 0.85, more preferably from 0.50 to 0.80, and particularly preferably from 0.55 to 0.75. When the apparent density is within such ranges, absorption performance is further improved. The apparent density is measured at 25°C in accordance with JIS K7365: 1999.

There is no particular limitation on the shape of the crosslinked polymer (A1) , and an irregularly pulverized shape, a scaly shape, a pearl-like shape, a rice grain shape, etc. can be applied.

The crosslinked polymer (A1) may be subjected to surface crosslinking treatment with a surface crosslinking agent as necessary. As the surface crosslinking agent, publicly known {e.g., JP 59-189103 A, JP 58-180233 A, JP 61-16903 A, JP 61-211305 A, JP 61-252212 A, JP 51-136588 A, and JP 61-257235 A} surface crosslinking agents {polyvalent glycidyls, polyhydric alcohols, polyamines, polyvalent aziridines, polyvalent isocyanates, silane coupling agents, polyvalent metals, etc.} and the like can be used. Among these surface crosslinking agents, polyvalent glycidyls, polyhydric alcohols and polyamines are preferred, polyvalent glycidyls and polyhydric alcohols are more preferred, polyvalent glycidyls are particularly preferred, and ethylene glycol diglycidyl ether is most preferred from the viewpoint of economical efficiency and absorption characteristics.

When applying surface crosslinking treatment, although the amount (% by weight) of the surface crosslinking agent used is not particularly limited because it may be varied according to the kind of the surface crosslinking agent, the conditions for crosslinking, target performance, etc. , it is preferably from 0.001 to 5 based on the weight of the water-soluble vinyl monomer (a1), the hydrolyzable vinyl monomer (a2) and the crosslinking agent (b), more preferably from 0.005 to 4, and particularly preferably from 0.01 to 3 from the viewpoint of absorption characteristics, etc.

When applying surface crosslinking treatment, publicly known {e.g., Japanese Patent No. 3648553, JP 2003-165883 A, JP 2005-75982 A, and JP 2005-95759 A} methods can be used as the method of the surface crosslinking treatment.

In the absorbent resin particles of the present invention, the hydrophobic substance (C) is present in a specific amount inside the absorbent resin particles and the hydrophobic substance (C) is present in a specific amount on the surface of the absorbent resin particles.

The content (% by weight) of the hydrophobic substance (C) inside the absorbent resin particles is from 0.01 to 10.0 based on the weight of the crosslinked polymer (A1), preferably from 0.02 to 5.0, more preferably from 0.05 to 3.0, and particularly preferably from 0.1 to 2.0 from the viewpoint of the absorption rate of a water-stopping tape.
The content (% by weight) of the hydrophobic substance (C) on the surface of the absorbent resin particles is from 0.001 to 1.0 based on the weight of the crosslinked polymer (A1), preferably from 0.005 to 0.5, more preferably from 0.01 to 0.3, and particularly preferably from 0. 01 to 0.2 from the viewpoint of the absorption rate of a water-stopping tape.

The content of the hydrophobic substance (C) present on the surface is measured by the following method. The content of the hydrophobic substance (C) present in the inside is defined to be a quantity obtained by subtracting the content of the hydrophobic substance (C) on the surface from the total amount of the hydrophobic substance (C) added.

<Method of measuring the content of hydrophobic substance (C) on the surface>

To a glass beaker are added 1 part by weight of the absorbent resin particles and 1000 parts by weight of an organic solvent {An organic solvent that can dissolve at least 0.01 parts by weight of the hydrophobic substance (C) in 100 parts by weight of the organic solvent at 25°C to 110°C. The temperature at which the hydrophobic substance (C) can be dissolved is regarded as a dissolution temperature. }, and then the mixture is left at rest at the dissolution temperature for 24 hours, so that an extract of the hydrophobic substance is obtained. This extract is filtered using a filter paper and is taken into a glass beaker weighed beforehand. Then, the solvent is evaporated and then the residue is weighed. The quantity obtained by subtracting the weight of the beaker weighed beforehand from the weight after the evaporation of the filtrate is multiplied by 100. The same operation as above is repeated twice more using the extracted sample remaining on the filter paper, and the whole amount of the dried evaporation residue collected via the three extractions is defined to be the content (% by weight) of the hydrophobic substance (C).

The hydrophobic substance (C) includes a hydrophobic substance (C1) containing a hydrocarbon group, a hydrophobic substance (C2) containing a hydrocarbon group with a fluorine atom, a hydrophobic substance (C3) having a polysiloxane structure, an inorganic oxide (C4) and the like.

Examples of the hydrophobic substance (C1) containing a hydrocarbon group include polyolefin resins, polyolefin resin derivatives, polystyrene resins, polystyrene resin derivatives, waxes, long chain fatty acid esters, long chain fatty acids and salts thereof, long chain aliphatic alcohols, mixtures of two or more members of the foregoing, and the like.

The polyolefin resins include polymers having weight average molecular weights of from 1000 to 1000000 containing olefins having 2 to 4 carbon atoms {ethylene, propylene, isobutylene, isoprene, and the like} as essential constituent monomers (the content of the olefins is at least 50% by weight based on the weight of the polyolefin resin) {polyethylene, polypropylene, polyisobutylene, poly(ethylene-isobutylene), isoprene, and the like}.

The polyolefin resin derivatives include polymers having weight average molecular weights of from 1000 to 1000000 prepared by introducing a carboxyl group (-COOH), 1,3-oxo-2-oxapropylene (-COOCO-), or the like to polyolefin resins {e.g., thermally degraded polyethylene, thermally degraded polypropylene, maleic acid-modified polyethylene, chlorinated polyethylene, maleic acid-modified polypropylene, ethylene-acrylic acid copolymers, ethylene-maleic anhydride copolymers, isobutylene-maleic anhydride copolymers, maleic polybutadiene, ethylene-vinyl acetate copolymers, and maleic ethylene-vinyl acetate copolymers}.

As the polystyrene resins, polymers having weight average molecular weights of from 1000 to 1000000 can be used, for example.

The polystyrene resin derivatives include polymers having weight average molecular weights of from 1000 to 1000000 containing styrene as an essential constituent monomer (the content of styrene is at least 50% by weight based on the weight of the polystyrene derivatives) {e.g., styrene-maleic anhydride copolymers, styrene-butadiene copolymers, and styrene-isobutylene copolymers}.

The waxes include waxes having melting points of from 50 to 200°C {e.g., paraffin wax, bees wax, carnauba wax, and beef tallow}.

The long chain fatty acid esters include esters of fatty acids having 8 to 30 carbon atoms with alcohols having 1 to 12 carbon atoms {e.g., methyl laurate, ethyl laurate, methyl stearate, ethyl stearate, methyl oleate, ethyl oleate, glycerol monolaurate, glycerol monostearate, glycerol monooleate, pentaerythritol monolaurate, pentaerythritol monostearate, pentaerythritol monooleate, sorbitol monolaurate, sorbitol monostearate, sorbitol monooleate, sucrose monopalmitate, sucrose dipalmitate, sucrose tripalmitate, sucrose monostearate, sucrose distearate, sucrose tristearate, and beef tallow}. Among these, sucrose monostearate, sucrose distearate, and sucrose tristearate are preferred from the viewpoint of the absorption rate of a water-stopping tape, etc., and sucrose monostearate and sucrose distearate are more preferred.

The long chain fatty acids and salts thereof include fatty acids having 8 to 30 carbon atoms {e.g., lauric acid, palmitic acid, stearic acids, oleic acid, dimer acid, and behenic acid} and their salts with zinc, calcium, magnesium or aluminum (hereinafter abbreviated as Zn, Ca, Mg, and Al) {e.g., Ca palmitate, Al palmitate, Ca stearate, Mg stearate, and Al stearate}. From the viewpoint of the absorption rate of a water-stopping tape, etc., Zn stearate, Ca stearate, Mg stearate, and Al stearate are preferred, and Mg stearate is more preferred.

The long chain aliphatic alcohols include aliphatic alcohols having 8 to 30 carbon atoms {e.g., lauryl alcohol, palmityl alcohol, stearyl alcohol, and oleyl alcohol}. From the viewpoint of the absorption rate of a water-stopping tape, etc., palmityl alcohol, stearyl alcohol, and oleyl alcohol are preferred and stearyl alcohol is more preferred.

Examples of the hydrophobic substance (C2) containing a hydrocarbon group with a fluorine atom include perfluoroalkanes, perfluoroalkenes, perfluoroaryls, perfluoroalkyl ethers, perfluoroalkyl carboxylic acids, perfluoroalkyl alcohols, mixtures of two or more members of the foregoing, and the like .

Examples of the perfluoroalkanes include alkanes having 4 to 42 fluorine atoms and 1 to 20 carbon atoms {e.g., trifluoromethane, heptadecafluorododecane, and poly(tetrafluoroethylene) (the degree of polymerization: from 2 to 10)}.

Examples of the perfluoroalkenes include alkenes having 4 to 42 fluorine atoms and 2 to 20 carbon atoms {e.g., trifluoroethylene and heptadecafluorododecene}.

Examples of the perfluoroaryls include aryls having 4 to 42 fluorine atoms and 6 to 20 carbon atoms {e.g., trifluorobenzene and heptadecafluorododecylbenzene}.

Examples of the perfluoroalkyl ethers include ethers having 2 to 82 fluorine atoms and 2 to 40 carbon atoms {e.g., ditrifluoromethyl ether and diheptadecafluorododecyl ether}.

Examples of the perfluoroalkyl carboxylic acids include carboxylic acids having 3 to 41 fluorine atoms and 1 to 21 carbon atoms {e.g., pentafluoroethanoic acid, heptadecafluorododecanoic acid, and their salts of metals (e.g., alkali metals and alkaline earth metals)}.

Examples of the perfluoroalkyl alcohols include alcohols having 3 to 41 fluorine atoms and 1 to 20 carbon atoms {e.g., pentafluoroethanol and heptadecafluorododecanol}, ethylene oxide (1 to 20 mol relative to 1 mol of alcohol) adducts of such alcohols, and the like.

Examples of the mixtures of two or more members of the foregoing include mixtures of perfluoroalkyl carboxylic acids and perfluoroalkyl alcohols {e.g., a mixture of pentafluoroethanoic acid and pentafluoroethanol}.

Examples of the hydrophobic substance (C3) having a polysiloxane structure include polydimethylsiloxanes, polyether-modified polysiloxanes {e.g., polyoxyethylene-modified polysiloxanes and poly(oxyethylene-oxypropylene)-modified polysiloxanes}, carboxy-modified polysiloxanes, epoxy-modified polysiloxanes, amino-modified polysiloxanes, alkoxy-modified polysiloxanes, mixtures thereof, and the like.

The position of the organic group (modifying group) of a modified silicone {e.g., a polyether-modified polysiloxane, a carboxy-modified polysiloxane, an epoxy-modified polysiloxane, or an amino-modified polysiloxane} is not particularly limited and it may be any of a side chain of a polysiloxane, both terminals of a polysiloxane, one terminal of a polysiloxane, and both of a side chain and both terminals of a polysiloxane. Among these, a side chain of a polysiloxane and both of a side chain and both terminals of a polysiloxane are preferred from the viewpoint of absorption characteristics, etc., and both of a side chain and both terminals of a polysiloxane are more preferred.

Examples of the organic group (modifying group) of polyether-modified polysiloxanes include groups (containing a polyoxyethylene group or a poly(oxyethylene-oxypropylene) group, and the like. The content (number) of the oxyethylene groups and/or the oxypropylene groups contained in a polyether-modified polysiloxane is preferably from 2 to 40 per molecule of the polyether-modified polysiloxane, more preferably from 5 to 30, particularly preferably from 7 to 20, and most preferably from 10 to 15. When the content is within such ranges, absorption characteristics are further improved. When oxyethylene groups and oxypropylene groups are contained, the content (% by weight) of the oxyethylene groups is preferably from 1 to 30, more preferably from 3 to 25, and particularly preferably from 5 to 20 based on the weight of the polysiloxane. When the content is within such ranges, absorption characteristics are further improved.

The polyether-modified polysiloxanes can be easily obtained from the market and can be preferably exemplified by the following commercially available products {modified position, type of oxyalkylene}.

- • Products available from Shin-Etsu Chemical Co., Ltd.
  KF-945 {side chain, oxyethylene and oxypropylene} and X-22-6191 {side chain, oxyethylene and oxypropylene}

- • Products available from Dow Corning Toray Co., Ltd.
  FZ-2110 {both terminals, oxyethylene and oxypropylene} and FZ-2207 {both terminals, oxyethylene and oxypropylene}

Examples of the organic group (modifying group) of carboxy-modified polysiloxanes include groups containing a carboxy group, and the like, examples of the organic group (modifying group) of epoxy-modified polysiloxanes include groups containing an epoxy group, and the like, and examples of the organic group (modifying group) of amino-modified polysiloxanes include groups containing an amino group (primary, secondary, or tertiary amino group). The content (g/mol) of the organic group (modifying group) of such a modified silicone, expressed by carboxy equivalent, epoxy equivalent, or amino equivalent, is preferably from 200 to 11000, more preferably from 600 to 8000, and particularly preferably from 1000 to 4000. When the content is within such ranges, absorption characteristics are further improved. Carboxy equivalents are measured in accordance with "16. Total Acid Value Test" of JIS C2101:1999. Epoxy equivalents are determined in accordance with JIS K7236:2001. Amino equivalents are measured in accordance with "8. Potentiometric Titration Method (base value; hydrochloric acid method)" of JIS K2501:2003.

The carboxy-modified polysiloxanes can be easily obtained from the market and can be preferably exemplified by the following commercially available products {modified position, carboxy equivalent (g/mol)}.

- • Products available from Shin-Etsu Chemical Co., Ltd.
  X-22-3701E {side chain, 4000} and X-22-3710 {one terminal, 1450}

- • Products available from Dow Corning Toray Co., Ltd.
  BY 16-880 {side chain, 3500} and BY 16-750 {both terminals, 750}

The epoxy-modified polysiloxanes can be easily obtained from the market and can be preferably exemplified by the following commercially available products {modified position, epoxy equivalent}.

- • Products available from Shin-Etsu Chemical Co., Ltd.
  KF-1002 {side chain, 4300}, X-22-3000T {side chain, 250} , X-22-163 {both terminals, 200} X-22-163C {both terminals, 2700} X-22-173DX {one terminal, 4500}, and X-22-9002 {side chain, both terminals, 5000}

- Products available from Dow Corning Toray Co., Ltd.
  FZ-3720 {side chain, 1200}, SF 8421 {side chain, 11000}, and BY 16-855D {side chain, 180}

The amino-modified silicones can be easily obtained from the market and can be preferably exemplified by the following commercially available products {modified position, amino equivalent}.

- Products available from Shin-Etsu Chemical Co., Ltd.
  KF-393 {side chain, 350} X-22-3820W {side chain, 55000} PAM-E {both terminals, 130} and X-22-1660B-3 {both terminals, 2200}

- Products available from Dow Corning Toray Co., Ltd.
  BY 16-849 {side chain, 600}, BY 16-879B {side chain, 8000}, BY 16-871 {both terminals, 130}, and BY 16-853U {both terminals, 450}

Examples of the mixtures of the foregoing include a mixture of a polydimethylsiloxane and a carboxyl-modified polysiloxane, a mixture of a polyether-modified polysiloxane and an amino-modified polysiloxane, and the like.

Examples of the inorganic oxide (C4) include silica (silicon dioxide), titania (titanium dioxide), alumina (aluminum oxide), magnesia (magnesium oxide), zinc oxide, mixtures of two or more of these oxides, and the like. In order to adjust the contact angle of an inorganic oxide into the below-described contact angle range, the inorganic oxide may have been hydrophobically treated.

The HLB value of the hydrophobic substance (C) is preferably from 1 to 10, more preferably from 3 to 8, and particularly preferably from 5 to 7. When the HLB value is within such ranges, the absorption rate of a water-stopping tape is further improved. The HLB value means a value of hydrophile-lipophile balance (HLB) value and is determined by the ODA method (see SHIN-KAIMEN KASSEIZAI NYUMON, page 197, Takehiko FUJIMOTO, published by Sanyo Chemical Industries, Ltd., 1981).

When the hydrophobic substance (C) is liquid at 150°C, the viscosity of (C) at 150°C is preferably 20 Pa·s or less, more preferably 15 Pa·s or less, and even more preferably from 0.007 to 10 Pa·s. When the viscosity is within such ranges, the absorption rate of a water-stopping tape is further improves.
The viscosity is measured in accordance with JIS Z8803-1991, "viscosity of liquid" 9. Viscosity measurement method by cone, and cone-plate rotational viscometer.

When the hydrophobic substance (C) is solid at 25°C, the contact angle of (C) with physiological saline is preferably from 20° to 60°, more preferably from 30° to 50°, and even more preferably from 30° to 45°. When the contact angle is within such ranges, the absorption rate of a water-stopping tape is further improved.
The contact angle of a hydrophobic substance is measured, in the case where the melting point of the hydrophobic substance is 200°C or lower, by using a film of the hydrophobic substance prepared by placing the hydrophobic substance in a glass petri dish with a heatproof temperature of 200°C or higher, then melting the hydrophobic substance at a temperature of from the (melting point of the hydrophobic substance) to the (melting point of the hydrophobic substance + 30°C) for 1 hour, and then cooling the hydrophobic substance. In the case where the melting point of the hydrophobic substance is 200°C or higher, the contact angle is measured using a film prepared by applying a pressure of 2 MPa to the hydrophobic substance for 30 seconds. When the hydrophobic substance is liquid, the measurement is carried out using a film prepared by dropping the hydrophobic substance onto a glass petri dish. The film thickness of the hydrophobic substance to be used for measurement is adjusted to 1 mm or more . The temperatures of the physiological saline to be used for measurement and the measurement atmosphere are adjusted to 25°C $\pm$ 2°C.

From the viewpoint of the absorption rate of a water-stopping tape, the SP value of the hydrophobic substance (C) is preferably from 6.0 to 16.0 and more preferably from 9.0 to 16.0.
The SP value is calculated by the Fedors method. The SP value can be expressed by the following formula.

$$\text{SP value } (\delta) = (\Delta H/V)^{1/2}$$

In the formula, $\Delta H$ represents a molar heat of vaporization (cal/mol) and V represents a molar volume (cm³/mol).
As to $\Delta H$ and V, the sum total ($\Delta H$) of the molar heat of vaporization and the sum total (V) of the molar volume of an atomic group disclosed in "POLYMER ENGINEERING AND SCIENCE FEBRUARY, 1974, Vol. 14, No. 2, ROBERT F. FEDORAS. (pages 151-153)[11] and "POLYMER ENGINEERING AND SCIENCE JUNE, 1974, Vol. 14, No. 6, ROBERT F, FEDORS. (page 472)" can be used.

This value is an index which means that substances being close in this value mix easily with each other (i.e. , they are high in compatibility) and substances with values being far from each other are difficult to mix with each other.

The oil absorption of the hydrophobic substance (C) is preferably from 40 to 450 g/100 g, more preferably from 48 to 438 g/100 g, and particularly preferably from 48 to 207 g/100 g from the viewpoint of the absorption rate of a water-stopping tape.

The oil absorption is a value that is determined by JIS K5101-13-1 Test methods for pigments, Part 13: Oil absorption - Section 1: Refined linseed oil method, and represents the amount of refined linseed oil to be absorbed by the hydrophobic substance (C) under certain conditions.

Among the above-mentioned hydrophobic substances (C), long chain fatty acids, salts thereof, hydrophobic substances (C3) having a polysiloxane structure, perfluoroalkanes, and silica are preferred from the viewpoint of absorption performance of a water-stopping tape, etc., and particularly preferred are Mg stearate, Ca stearate, Zn stearate, Al stearate, silica {Sylysia 710 (produced by Fuji Silysia Chemical Ltd.), Sylophobic 200 (produced by Fuji Silysia Chemical Ltd.), Aerosil 200 (produced by Nippon Aerosil Co., Ltd.)}, and poly(tetrafluoroethylene) (produced by Wako Pure Chemical Industries, Ltd.).

The absorbent resin particles of the present invention in which the hydrophobic substance (C) is present inside the absorbent resin particles and (C) is present on the surface of the absorbent resin particles is preferably produced by a method including any step of the following (1) through (6).

(1) a step of mixing or kneading a hydrophobic substance (C) and a hydrous gel of a crosslinked polymer (A1)

(2) a step of further mixing (C), under heating, with a crosslinked polymer prepared by mixing or kneading (C) and a hydrous gel of (A1) and then drying them

(3) a step of further mixing (C) at the time of surface-crosslinking a crosslinked polymer prepared by mixing or kneading (C) and a hydrous gel of (A1) and then drying them

(4) a step of obtaining a hydrous gel of a crosslinked polymer by polymerizing constitutional units in the presence of (C)

(5) a step of further mixing (C), under heating, with a crosslinked polymer prepared by polymerizing constitutional units in the presence of (C) and then drying them

(6) a step of further mixing (C) at the time of surface-crosslinking a crosslinked polymer prepared by polymerizing constitutional units in the presence of (C) and then drying them

In one of steps (1) through (3), a product prepared by processing a hydrophobic substance (C) into a pulverized film, beads, rods, or fibers can be used as (C) . The volume average particle diameter ($\mu$m) of the pulverized film is preferably from 5 to 50, more preferably from 7 to 30, and particularly preferably from 10 to 20. The volume average particle diameter ($\mu$m) of the beads is preferably from 0.5 to 100, more preferably from 1 to 30, and particularly preferably from 2 to 20. The length ($\mu$m) of the rods is preferably from 5 to 50, more preferably from 7 to 30, particularly preferably from 10 to 20 and the diameter ($\mu$m) is preferably from 0.5 to 50, more preferably from 1 to 30, and particularly preferably from 2 to 15. The length ($\mu$m) of the fibers is preferably from 5 to 50, more preferably from 7 to 30, particularly preferably from 10 to 20 and the diameter ($\mu$m) is preferably from 0.5 to 50, more preferably from 1 to 30, and particularly preferably from 2 to 15. When these are within such ranges, absorption performance of a water-stopping tape is further improved.

When a hydrophobic substance (C1) containing a hydrocarbon group is used, examples thereof include beads, such as Mg stearate beads, polystyrene beads, and polyethylene beads, pulverized products (volume average particle size: from 20 to 50 $\mu$m) of a film, such as a polyethylene film (e.g., SE625M and UB-1, both produced by Tamapoly Co., Ltd. ) or a polystyrene film (e.g. , OPS produced by Asahi Kasei Corporation) and the like . When a hydrophobic substance (C3) containing a polysiloxane is used, examples thereof include silicone beads {e.g., TOSPEARL 120 (irregularly shaped silicone resin fine powder, volume average particle diameter: 2 $\mu$m), TOSPEARL 3120 (truly spherical silicone resin fine powder, volume average particle diameter: 12 $\mu$m), TOSPEARL 145 (truly spherical silicone resin fine powder, volume average particle diameter: 4.5 $\mu$m) , all produced by GE Toshiba Silicone Co. , Ltd.} and the like. When the hydrophobic substance (C2) containing a hydrocarbon group with a fluorine atom is used, examples thereof include pulverized products (volume average particle diameter: from 20 to 50 $\mu$m) of a fluorine film {e.g., FLUON PTFE (polytetrafluoroethylene film), FLUON PFA (a film of a copolymer of tetrafluoroethylene and perfluoroethylene), and FLUON AFLAS (a film of a copolymer of tetrafluoroethylene and propylene) , all produced by Asahi Glass Co . , Ltd. } and the like.

Among these, beads are preferred from the viewpoint of absorption performance of a water-stopping tape, and more preferred are Mg stearate beads.

The method of mixing the crosslinked polymer (A1) and the hydrophobic substance (C) is not particularly limited as long as they can thereby be mixed so that the hydrophobic substance (C) may be present in the inside and on the surface of the crosslinked polymer (A1).

In order to make (C) be present in the inside, it is preferred, from the viewpoint of making (C) to be contained in (A1) uniformly, to mix (C) not with dried (A1) but with a hydrous gel of (A1) or a polymerization liquid before polymerizing (A1) and it is more preferred to mix (C) with a hydrous gel of (A1). As to mixing, it is preferred to mix (C) uniformly so that (C) may be kneaded in.

In order to make (C) be present on the surface, it is preferred, from the viewpoint of making (C) to be dispersed uniformly on the surface, to mix (C) not with a polymerization liquid before polymerizing (A1) but with a hydrous gel of (A1) or dried (A1). It is preferred to perform mixing uniformly.

When producing the crosslinked polymer (A1) by an aqueous solution polymerization method, although there is no particular limitation on the timing of mixing or kneading the hydrophobic substance (C) with (A1) , it may be during a polymerization step { (A1) is produced in the presence of (C) }, just after a polymerization step, during mincing of a hydrous gel, during drying of a hydrous gel, after drying of a hydrous gel, or the like. Among these, in order to make (C) be present in the inside, it is preferred, from the viewpoint of absorption performance of a water-stopping tape, etc., to knead (C) just after a polymerization step and during a step of mincing a hydrous gel, and it is more preferred to knead (C) during a step of mincing a hydrous gel. When the hydrophobic substance (C) is a long chain fatty acid salt, it is permitted to add a long chain fatty acid and a hydroxide of a metal as a mixture thereof or alternatively to add them separately.

In order to make (C) be present on the surface, it is preferred, from the viewpoint of absorption performance, etc., to mix or knead (C) just after a polymerization step, during a step of mincing a hydrous gel or after drying a hydrous gel {mix with dried (A1)} and it is secondly preferred to mix (C) after drying a hydrous gel {dried (A1) }.

When producing the crosslinked polymer (A1) by a reversed-phase suspension polymerization method or emulsion polymerization, although there is no particular limitation on the timing of mixing the hydrophobic substance (C) with (A1), it may be, for example, during a polymerization step { (A1) is produced in the presence of (C) }, just after a polymerization step, during a dehydration step (during a step of dehydration to a moisture content of about 10% by weight), just after a dehydration step, during a step of separating the organic solvent used for polymerization by distillation, during drying of a hydrous gel, during a step of surface-crosslinking a hydrous gel after drying, and after surface-crosslinking a dried hydrous gel. Among these, in order to make (C) be present inside the absorbent resin particles, during a polymerization step, just after a polymerization step, during a dehydration step, just after a dehydration step, and during a step of separating the organic solvent used for polymerization by distillation are preferred from the viewpoint of the absorption rate of a water-stopping tape, etc., and more preferred are during a polymerization step and just after a polymerization step.

In order to make (C) be present on the surface, during a step of surface-crosslinking a hydrous gel after drying and after surface-crosslinking a dried hydrous gel are preferred from the viewpoint of absorption performance of a water--stopping tape, etc., and more preferred is after surface-crosslinking a dried hydrous gel.

When mixing (C) during drying of a hydrous gel, an ordinary apparatus such as a Bex Mill, a rubber chopper, a Pharma Mill, a mincing machine, an impact type pulverizer, or a roll type pulverizer can be used as a mixing apparatus. When mixing (C) in a polymerization liquid, an apparatus with relatively high stirring force, such as a homomixer or a biomixer, can be used. When mixing (C) during drying of a hydrous gel, a kneading apparatus such as an SV mixer can also be used.

The mixing temperature (°C) is preferably from 20 to 100, more preferably from 40 to 90, and particularly preferably from 50 to 80. When the mixing temperature is within such ranges, it becomes easier to perform uniform mixing and absorption performance is further improved.

When a hydrophobic substance (C) is mixed with a crosslinked polymer under heating in the above-mentioned steps (2) and (5), the mixing temperature is preferably up to 150°C and from {the melting point of (C) } to {the melting point of (C) + 50°C}, and more preferably from {the melting point of (C)} to {the melting point of (C) + 30°C}. When the mixing temperature is within such ranges, (C) is present on the surface uniformly and absorption performance is further improved.

In the method of producing a crosslinked polymer (A1) in the presence of a hydrophobic substance (C), it is also permitted to produce (A1) by making (C) dissolved or emulsified (dispersed) in a polymerization liquid (A1) and precipitating (C) with the advance of the polymerization of (A1). The polymerization method is the same as that of the case of (A1) except for performing polymerization in the presence of (C).

The hydrophobic substance (C) can be used in a form of having been dissolved and/or emulsified in water and/or a volatile solvent (however, it is preferred to use no emulsifier). As the volatile solvent, one having a vapor pressure (Pa) at 20°C of from 0.13 to 5.3 is preferred from the viewpoint of ease of removal thereof, etc., one having a vapor pressure of from 0.15 to 4.5 is more preferred, and one having a vapor pressure of from 0.23 to 3.8 is particularly preferred. Examples of the volatile solvent include alcohols having 1 to 3 carbon atoms (e.g., methanol, ethanol, and isopropyl alcohol) , hydrocarbons having 5 to 8 carbon atoms (e.g. , pentane, hexane, cyclohexane, and toluene), ethers having 2 to 4 carbon atoms (e.g., dimethyl ether, diethyl ether, and tetrahydrofuran), ketones having 3 to 4 carbon atoms (e.g, , acetone and methyl ethyl ketone) , esters having 3 to 5 carbon atoms (e.g., ethyl formate, ethyl acetate, isopropyl acetate, and diethyl carbonate) and the like. When water and/or a volatile solvent are used, the amount (% by weight) of them to be used is preferably from 1 to 900 based on the weight of the hydrophobic substance (C), more preferably from 5 to 700, and particularly preferably from 10 to 400. When water and a volatile solvent are used, the amount (% by weight) of water to be used is preferably from 50 to 98 based on the combined weight of water and the volatile solvent, more preferably from 60 to 95, and particularly preferably from 70 to 90.

The hydrous gel containing the hydrophobic substance (C) can be chopped as necessary. The size (longest diameter) of the hydrous gel particles after chopping is preferably from 50 $\mu$m to 10 cm, more preferably from 100 $\mu$m to 2 cm, and particularly preferably from 1 mm to 1 cm. When the size is within such ranges, dryability during a drying step is further improved.

As a chopping method, the same method as that used in the case of the crosslinked polymer (A1) can be used.

When a solvent (containing an organic solvent and/or water) is used for the production of absorbent resin particles, the solvent may be distilled off after polymerization.

When an organic solvent is contained in the solvent, the content (% by weight) of the organic solvent after distillation, based on the weight of the absorbent resin particles, is preferably from 0 to 10, more preferably from 0 to 5, particularly preferably from 0 to 3, and most preferably from 0 to 1. When the content is within such ranges, absorption performance (especially, water capacity) of absorbent resin particles is further improved.

When water is contained in the solvent, the content (% by weight) of water after distillation is preferably from 0 to 20 based on the weight of the absorbent resin particles, more preferably from 1 to 17, particularly preferably from 2 to 14, and most preferably from 3 to 11. When the content is within such ranges, absorption performance (especially, water capacity) and breakability of absorbent resin particles after drying are further improved.

The method of measuring the contents of an organic solvent and water and the method of distilling off the solvent are the same as those in the case of the crosslinked polymer (Al).

The absorbent resin particles may be pulverized. When the absorbent resin particles contain a solvent, it is preferred to pulverize the particles after distilling off (drying) the solvent.

When performing pulverization, the weight average particle diameter ($\mu$m) after the pulverization is preferably from 10 to 800, more preferably from 15 to 700, still more preferably from 20 to 600, even more preferably from 30 to 500, particularly preferably from 45 to 450, and most preferably from 45 to 170. When the weight average particle diameter is within such ranges, handling properties after pulverization (e.g., powder flowability of absorbent resin particles) and absorption performance of a water-stopping tape are further improved. The weight average particle diameter can be measured in the same manner as in the case of the crosslinked polymer (A1).

For pulverization and particle size adjustment, the same methods as those in the case of (A1) can be used.

The particle diameter distribution ($\mu$m) of the absorbent resin particles is preferably from 0 to 500, more preferably from 0 to 400, still more preferably from 0 to 350, even more preferably from 0 to 300, particularly preferably from 0 to 250, and most preferably from 0 to 200. When the particle diameter distribution is within such ranges, handling properties after pulverization (e.g., powder flowability of absorbent resin particles) and absorption performance of a water-stopping tape are further improved. The particle diameter distribution ($\mu$m) is determined by using MT3300 EX-II manufactured by Nikkiso Co., Ltd. and using the following formula:

$$\texttt{particle diameter distribution = (d84\% - d16\%)/2}$$

d84%: a particle diameter ($\mu$m) of a point where an accumulation curve becomes 84 vol%
d16%: a particle diameter ($\mu$m) of a point where an accumulation curve becomes 16 vol%

The apparent density (g/ml) of the absorbent resin particles of the present invention is preferably from 0.45 to 0.85, more preferably from 0.50 to 0.80, and particularly preferably from 0.55 to 0.75. When the apparent density is within such ranges, absorption performance of a water-stopping tape is further improved. The apparent density can be measured in the same manner as in the case of the crosslinked polymer (A1).

There is no particular limitation on the shape of the absorbent resin particles, and an irregularly pulverized shape, a scaly shape, a pearl-like shape, a rice grain shape, etc. can be applied. The irregularly pulverized shape is preferred from the viewpoint of the tendency of absorbent resin to fall off from a water-stopping tape.

Absorbent resin particles can be surface-crosslinked as necessary. As a crosslinking agent (surface-crosslinking agent) for performing surface-crosslinking, the same crosslinking agent as the above-mentioned crosslinking agent (b) {this may hereinafter be referred to as an internal crosslinking agent (b) }} can be used. As the surface-crosslinking agent, a crosslinking agent that has at least two functional groups that can react with a waster-soluble substituent of a water-soluble vinyl monomer (a1) and/or a water-soluble substituent to be formed as a result of the hydrolysis of a vinyl monomer (a2) is preferred from the viewpoint of absorption performance of absorbent resin particles, etc ., polyvalent glycidyls are more preferred, ethylene glycol diglycidyl ether and glycerol diglycidyl ether are particularly preferred, and ethylene glycol diglycidyl ether is most preferred.

When performing surface-crosslinking, the content (% by weight) of the surface-crosslinking agent is preferably from 0.001 to 7, more preferably from 0.002 to 5, and particularly preferably from 0.003 to 4 based on the total weight of (a1) and/or (a2), the internal crosslinking agent (b), and the additional vinyl monomer (a3) used as necessary. When the content is within such ranges, absorption performance is further improved. The surf ace-crosslinking can be achieved by, for example, a method in which an aqueous solution containing a surface-crosslinking agent is sprayed or penetrated to absorbent particles and then heating (100 to 200°C) the particles.

The absorbent resin particles can be repulverized in the same manner as described above after being surface-crosslinked as necessary.

The absorbent resin particles of the present invention can contain other additives {publicly known (e.g., JP 2003-225565 and JP 2006-131767) antiseptics, antifungal agents, antibacterial agents, antioxidants, UV absorbers, coloring agents, aromatics, deodorants, inorganic powders, organic fibrous materials, etc.}. When such additives are contained, the content (% by weight) of the additives is preferably from 0. 001 to 10 based on the weight of the crosslinked polymer (A1), more preferably from 0.01 to 5, particularly preferably from 0.05 to 1, and most preferably from 0.1 to 0.5.

From the viewpoint of the absorption rate of a water-stopping tape, the absorbent resin particles of the present invention preferably have an ion exchange water absorption rate of from 2 . 0 to 250 . 0 g/g/s, more preferably from 3 . 0 to 200.0 g/g/s, even more preferably From 4.0 to 150.0 g/g/s, and particularly preferably from 5.0 to 19.0 g/g/s. From the viewpoint of the absorption rate of a water-stopping tape, it is meant that the larger the value of the absorption rate, the better it its.

The above-mentioned ion exchange water absorption rate is measured by the following method.

<Method of measuring the ion exchange water absorption rate>

Measurement is done by a method the same as the method of measuring the ion exchange water absorption rate in accordance with JIS K7224-1996 except for adjusting the weight of absorbent resin particles to 0.2 g.

The water capacity (g/g) of the absorbent resin particles of the present invention is preferably from 28 to 45 from the viewpoint of absorption performance, more preferably from 30 to 40, and particularly preferably from 33 to 40. The water capacity of absorbent resin particles is measured by the following method.

<Method of measuring the water capacity of absorbent resin particles>

1.00 g of a measurement sample collected by removing particles equal to or smaller than 106 $\mu$m with a sieve is put into a tea bag (20 cm long, 10 cm wide) made of nylon net with an opening size of 63 $\mu$m (JIS Z8801-1:2006) and then is immersed in 1,000 ml of physiological saline (salt concentration: 0.9% by weight) for 1 hour without stirring, followed by draining off water by hanging the sample for 15 minutes. Then, the sample in the tea bag is put in a centrifuge and centrifugally dewatered at 150 G for 90 seconds, thereby removing excess physiological saline. Subsequently, the weight (h1) of the sample including the tea bag is measured and then a water capacity is calculated from the following formula. The temperature of the physiological saline used and that of the measurement atmosphere are adjusted to 25°C $\pm$ 2°C.

In the same way as described above except for using no measurement sample, the weight of the tea bag after centrifugal dewatering is measured, and it is expressed by (h2).

$$\text{Water capacity (g/g)} = \text{(h1)} - \text{(h2)}$$

The absorbent resin particles of the present invention demonstrate performance excellent for water-stopping tapes.

In use for a water-stopping tape, absorbent resin particles are used for a water-stopping tape as they are or after being subjected to kneading with a rubber and/or a thermoplastic resin and the like, followed by shaping, or by being supported on nonwoven fabric or paper .

The absorbent resin particles of the present invention can be used as a water-stopping tape like the publicly known (e.g., JP 8-283697 A and JP 9-297248 A) absorbent resin particles.

The water-stopping tape according to the present invention is a product produced by fixing the absorbent resin particles involved in the inventive water-stopping agent to one side, to both sides, and/or in voids of a substrate.

The absorbent resin particles may be fixed in a dry state to the substrate or alternatively may be fixed in a wet state to the substrate. Although there are many methods of producing a water-stopping tape by fixing absorbent resin particles to a substrate, the following method can be used, for example.

(1) A mixture for fixation prepared by adding an organic polymer-based binder, inorganic or organic fine particles, a fibrous substance, a surfactant, a solvent, and so on as necessary to absorbent resin particles is applied to one side or both sides of a sheet-like or tape-like substrate, such as nonwoven fabric, woven fabric, paper or film, or a substrate is impregnated with such a mixture for fixation. Then, drying is performed when a solvent has been used and heat treatment is performed when a thermosetting binder or a heat-sealable binder has been used.

(2) The above-mentioned mixture for fixation is sandwiched between two or more sheet-like or tape-like substrates of nonwoven fabric, woven fabric, paper or film, or the like . Then, drying is performed when a solvent water has been used and heat treatment is performed when a thermosetting binder or a heat-sealable binder has been used.

The production of the water-stopping tape of the present invention does not necessarily require a binder and absorbent resin particles can be fixed to a substrate only by impregnating a sheet-like substrate made of nonwoven fabric, woven fabric, paper, film, synthetic fiber, natural fiber, or the like with a mixture prepared by dispersing absorbent resin particles in an organic solvent. However, water-stopping tapes produced by such a method are superior in absorption rate because they are free of disturbance by binders, but absorbent resin particles may fall off from substrates easily.

In order to prevent absorbent resin particles from failing off from a substrate, it is preferred to use an organic polymer-based binder. From the viewpoints of the water-stopping ability of a water-stopping tape and falling off of absorbent resin particles, the amount of the organic polymer-based binder to be used is preferably from 5 to 300 parts by weight, more preferably from 10 to 80 parts by weight relative to 100 parts by weight of the absorbent resin.

Examples of the organic polymer-based binder include synthetic rubber, natural rubber, polyacrylic acid esters, polyalkylene oxides, polyurethanes, hydrophilic polyurethanes, polyesters, polyamides, polyethylenes, ethylene-vinyl acetate copolymers, poly(vinyl alcohol), carboxylmethylcellulose, hydroxyethylcellulose, poly(acrylic acid), crosslinked poly(acrylic acid) and the like; especially, a hydrophilic polyurethane obtainable by reacting a poly (alkylene oxide) with an isocyanate compound is preferred.

In the production of the water-stopping tape of the present invention, various additives may be added for the purpose of improving water-stopping ability and so on. Although such additives are not particularly limited, examples thereof include fibrous substances, such as asbestos, pulp, synthetic fiber, and natural fiber, and inorganic or organic fine particles such as silica, alumina, synthetic silicates, magnesium carbonate, magnesium silicate, magnesium hydroxide, aluminum hydroxide, calcium hydroxide, calcium carbonate, bentonite, kaolinite, zeolite, titanium oxide, activated white earth, borax, zinc borate, and carbon black. Especially, inorganic fine particles have an effect on improvement in the water absorption rate and flame retardancy of a water-stopping tape.

The volume average particle diameter of the inorganic fine particles is preferably 200 $\mu$m or smaller, particularly preferably from 1 to 50 $\mu$m from the viewpoint of the water-stopping ability of a water-stopping tape.

The amount of the inorganic fine particles to be added is preferably from 0.05 to 100 parts by weight, particularly preferably from 1 to 50 parts by weight relative to 100 parts by weight of the absorbent resin particles.

Although there is no particular limitation on the substrate to be used for the water-stopping tape of the present invention, examples thereof include nonwoven fabric, woven fabric, paper, film, and so on made of polyolefins, polyesters, polyamides, polyacrylonitriles, polycarbonates, cellulose, and the like. Especially, long fiber nonwoven fabric sheets of polyesters, acrylic and the like produced by a spunbonding method are preferred in respect of strength, water-stopping ability, and antibiodegradability.

Although there is no particular limitation on the weight of the absorbent resin particles to be fixed to the water-stopping tape of the present invention, from the viewpoints of the water-stopping ability of a water-stopping tape and flexibility of a water-stopping tape, the weight expressed in dry weight is preferably from 5 to 300 g/m$^2$, and particularly preferably from 30 to 150 g/m$^2$.

EXAMPLES

The present invention is further described below with reference to examples, but the present invention is not limited thereto.

<Example 1>

155 Parts of a water-soluble vinyl monomer {acrylic acid, produced by Mitsubishi Chemical Corporation}, 0.43 parts of a crosslinking agent {pentaerythritol triallyl ether, produced by Daiso Co., Ltd. }, and 415 . 69 parts of deionized water were kept at 3°C under stirring and mixing. After adjustment of a dissolved oxygen amount to 1 ppm or less by introduction of nitrogen into this mixture, 0.62 parts of a 1% by weight aqueous solution of hydrogen peroxide, 1.16 parts of a 2% by weight aqueous solution of ascorbic acid, 0. 23 parts of 0.1% by weight iron sulfate heptahydrate, and 1.55 parts of a 10% by weight aqueous solution of 2,2'-azobis[2-methylpropionamidine] dihydrochloride were added and mixed, so that polymerization was initiated. After the temperature of the mixture reached 90°C, polymerization was performed at 90 $\pm$ 2°C for about 5 hours, thereby obtaining a hydrous gel (1).

Then, while chopping 578.06 parts of the hydrous gel (1) with a mincing machine (12VR-400K, manufactured by ROYAL), 124.28 parts of a 48.5% aqueous solution of sodium hydroxide was added and mixed, and subsequently 1. 9 parts of a hydrophobic substance {magnesium stearate, particle diameter: about 1 mm, produced by Sakai Chemical Industry Co., Ltd., oil absorption: 48 g/100 g} was added and mixed, so that a chopped gel (2) was obtained. Moreover, the chopped gel (2) was dried in a through-flow band dryer {at 150°C, wind speed: 2 m/second}, so that a dried material was obtained. The dried material was pulverized with a juicing blender (OSTERIZER BLENDER manufactured by Oster) and then was adjusted to have particle sizes of from 150 to 710 μm by using a 150 μm sieve and a 710 μm sieve, so that particles of the dried material were obtained. While stirring 100 parts of the dried material particles at high speed (by using "High-speed stirring turbulizer" manufactured by Hosokawa Micron Co. , rate of revolution: 2000 rpm), 10 parts of a 2% ethylene glycol diglycidyl ether solution in water/methanol mixture (weight ratio of water/methanol = 70/30) was added and mixed by spaying. The mixture was left at rest at 150°C for 30 minutes to be surface-crosslinked, SO that dried at 150°C for 30 minutes to be surface-crosslinked, so that dried resin particles were obtained. The dried resin particles were pulverized with a juicing blender (OSTERIZER BLENDER manufactured by Oster) and then was adjusted to have particle sizes of 300 μm or smaller by using a 300 μm sieve, so that absorbent resin particles (1) having a weight average particle diameter of 170 μm were obtained. The apparent density of the absorbent resin particles (1) was 0.66 g/ml. It was found that the hydrophobic substance (C) was present inside the absorbent resin particles in an amount of 0.92% and the hydrophobic substance (C) was present on the surface of the absorbent resin particles in an amount of 0.08%.

<Example 2>

Absorbent resin particles (2) of the present invention were obtained in the same manner as in Example 1, except for changing the "hydrophobic substance {magnesium stearate}" to "hydrophobic substance {TOSPEARL 240 (irregularly shaped silicone resin fine powder, volume average particle diameter: 4 μm, produced by GE Toshiba Silicone Co. , Ltd. , oil absorption: 51 g/100 g)}." The absorbent resin particles (2) had a weight average particle diameter of 170 μm and an apparent density of 0.65 g/ml. It was found that the hydrophobic substance (C) was present inside the absorbent resin particles in an amount of 0.96% and the hydrophobic substance (C) was present on the surface of the absorbent resin particles in an amount of 0.04%.

<Example 3>

Absorbent resin particles (3) of the present invention were obtained in the same manner as in Example 1, except for changing the "1.9 parts of a hydrophobic substance {magnesium stearate} to "0.02 parts of a hydrophobic substance {magnesium stearate}[11] and adding "0.1 parts of a hydrophobic substance {magnesium stearate}" to 100 parts of dried resin particles resulting from surface-crosslinking, followed by stirring at 80°C for 30 minutes by using a bench type kneader (PNV-1, manufactured by HITACHI Corporation). The absorbent resin particles (3) had a weight average particle diameter of 170 μm and an apparent density of 0.67 g/ml. It was found that the hydrophobic substance (C) was present inside the absorbent resin particles in an amount of 0.01% and the hydrophobic substance (C) was present on the surface of the absorbent resin particles in an amount of 0.10%.

<Example 4>

Absorbent resin particles (4) of the present invention were obtained in the same manner as in Example 1, except for changing the "1.9 parts of a hydrophobic substance {magnesium stearate}" to "19 parts of a hydrophobic substance {magnesium stearate}" and adding "1.0 part of a hydrophobic substance {magnesium stearate}" to 100 parts of dried resin particles resulting from surface-crosslinking, followed by stirring at 80°C for 30 minutes by using a bench type kneader (PNV-1, manufactured by HITACHI Corporation). The absorbent resin particles (4) had a weight average particle diameter of 170 μm and an apparent density of 0.65 g/ml. It was found that the hydrophobic substance (C) was present inside the absorbent resin particles in an amount of 10.0% and the hydrophobic substance (C) was present on the surface of the absorbent resin particles in an amount of 1.0%.

<Example 5>

Absorbent resin particles (5) of the present invention were obtained in the same manner as in Example 1, except for changing the "1.9 parts of a hydrophobic substance {magnesium stearate}" to "0. 02 parts of a hydrophobic substance {magnesium stearate}." The absorbent resin particles (5) had a weight average particle diameter of 170 μm and an apparent density of 0.67 g/ml. It was found that the hydrophobic substance (C) was present inside the absorbent resin particles in an amount of 0.01% and the hydrophobic substance (C) was present on the surface of the absorbent resin particles in an amount of 0.001%.

<Example 6>

Absorbent resin particles (6) of the present invention were obtained in the same manner as in Example 1, except for adding "0.1 parts of a hydrophobic substance {silica (Sylysia 470, produced by Fuji Silysia Chemical Ltd., oil absorption: 156 g/100 g) }" to 100 parts of dried resin particles resulting from surface-crosslinking, followed by stirring at 80°C for 30 minutes by using a bench type kneader (PNV-1, manufactured by HITACHI Corporation). The absorbent resin particles (6) had a weight average particle diameter of 170 $\mu$m and an apparent density of 0.66 g/ml. It was found that the hydrophobic substance (C) was present inside the absorbent resin particles in an amount of 1.0% and the hydrophobic substance (C) was present on the surface of the absorbent resin particles in an amount of 0.10%.

<Example 7>

Absorbent resin particles (7) of the present invention were obtained in the same manner as in Example 1, except for changing the "1.9 parts of a hydrophobic substance {magnesium stearate}" to "1.9 parts of a hydrophobic substance {silica (Sylysia 470)}. " The absorbent resin particles (7) had a weight average particle diameter of 170 $\mu$m and an apparent density of 0.66 g/ml. It was found that the hydrophobic substance (C) was present inside the absorbent resin particles in an amount of 0.96% and the hydrophobic substance (C) was present on the surface of the absorbent resin particles in an amount of 0.04%.

<Example 8>

Absorbent resin particles (8) of the present invention were obtained in the same manner as in Example 1, except for changing the "1.9 parts of a hydrophobic substance {magnesium stearate}" to "1.9 parts of a hydrophobic substance {titanium dioxide, produced by Nippon Aerosil Co., Ltd., oil absorption: 156 g/100 g}." The absorbent resin particles (8) had a weight average particle diameter of 170 $\mu$m and an apparent density of 0.66 g/ml. It was found that the hydrophobic substance (C) was present inside the absorbent resin particles in an amount of 0.98% and the hydrophobic substance (C) was present on the surface of the absorbent resin particles in an amount of 0.02%.

<Example 9>

Absorbent resin particles (9) of the present invention were obtained in the same manner as in Example 1, except for adding "0.1 parts of a hydrophobic substance {titanium dioxide}" to 100 parts of dried resin particles resulting from surface-crosslinking, followed by stirring at 80°C for 30 minutes by using a bench type kneader (PNV-1, manufactured by HITACHI Corporation). The absorbent resin particles (9) had a weight average particle diameter of 170 $\mu$m and an apparent density of 0.66 g/ml. It was found that the hydrophobic substance (C) was present inside the absorbent resin particles in an amount of 1.0% and the hydrophobic substance (C) was present on the surface of the absorbent resin particles in an amount of 0.10%.

<Example 10>

Absorbent resin particles (10) of the present invention were obtained in the same manner as in Example 1, except for adding "0.1 parts of a hydrophobic substance {PTFE molding powder, produced by Du Pont-Mitsui Fluorochemicals Co., Ltd., oil absorption: 57 g/100 g}" to 100 parts of dried resin particles resulting from surface-crosslinking, followed by stirring at 80°C for 30 minutes by using a bench type kneader (PNV-1, manufactured by HITACHI Corporation). The absorbent resin particles (10) had a weight average particle diameter of 170 $\mu$m and an apparent density of 0.66 g/ml. It was found that the hydrophobic substance (C) was present inside the absorbent resin particles in an amount of 1.0% and the hydrophobic substance (C) was present on the surface of the absorbent resin particles in an amount of 0.10%.

<Example 11>

Absorbent resin particles (11) of the present invention were obtained in the same manner as in Example 1, except for changing the "1.9 parts of a hydrophobic substance {magnesium stearate}" to "0.27 parts of a hydrophobic substance {poly(tetrafluoroethylene), degree of polymerization: 50 to 200, produced by Wako Pure Chemical Industries, Ltd., SP value: 6.2}." The absorbent resin particles (11) had a weight average particle diameter of 296 $\mu$m and an apparent density of 0.61 g/ml. It was found that the hydrophobic substance (C) was present inside the absorbent resin particles in an amount of 0.96% and the hydrophobic substance (C) was present on the surface of the absorbent resin particles in an amount of 0.04%.

<Example 12>

Absorbent resin particles (12) of the present invention were obtained in the same manner as in Example 1, except for changing the "1.9 parts of a hydrophobic substance {magnesium stearate}" to "0.9 parts of a hydrophobic substance {SANMORIN OT-70, produced by Sanyo Chemical Industries, Ltd., SP value: 16.0}." The absorbent resin particles (12) had a weight average particle diameter of 316 μm and an apparent density of 0.58 g/ml. It was found that the hydrophobic substance (C) was present inside the absorbent resin particles in an amount of 0.96% and the hydrophobic substance (C) was present on the surface of the absorbent resin particles in an amount of 0.04%.

<Example 13>

Absorbent resin particles (13) of the present invention were obtained in the same manner as in Example 1, except for changing the "1.9 parts of a hydrophobic substance {magnesium stearate}" to "0.27 parts of a hydrophobic substance {vinyl acetate (monomer), produced by Wako Pure Chemical Industries, Ltd., SP value: 9.4}." The absorbent resin particles (13) had a weight average particle diameter of 254 μm and an apparent density of 0.58 g/ml. It was found that the hydrophobic substance (C) was present inside the absorbent resin particles in an amount of 0.96% and the hydrophobic substance (C) was present on the surface of the absorbent resin particles in an amount of 0.04%.

<Example 14>

Absorbent resin particles (14) of the present invention were obtained in the same manner as in Example 1, except for changing the "1.9 parts of a hydrophobic substance {magnesium stearate}" to "0.27 parts of a hydrophobic substance {Kaolin ASP, produced by BASF Catalysts LLC, oil absorption: 51 g/100 g}." The absorbent resin particles (14) had a weight average particle diameter of 310 μm and an apparent density of 0.60 g/ml. It was found that the hydrophobic substance (C) was present inside the absorbent resin particles in an amount of 0.96% and the hydrophobic substance (C) was present on the surface of the absorbent resin particles in an amount of 0.04%.

<Example 15>

Absorbent resin particles (15) of the present invention were obtained in the same manner as in Example 1, except for changing the "1.9 parts of a hydrophobic substance {magnesium stearate}" to "0.27 parts of a hydrophobic substance {Aerosil 200, produced by Nippon Aerosil Co., Ltd., oil absorption: 438 g/100 g}." The absorbent resin particles (15) had a weight average particle diameter of 326 μm and an apparent density of 0.59 g/ml. It was found that the hydrophobic substance (C) was present inside the absorbent resin particles in an amount of 0.96% and the hydrophobic substance (C) was present on the surface of the absorbent resin particles in an amount of 0.04%.

<Example 16>

Absorbent resin particles (16) of the present invention were obtained in the same manner as in Example 1, except for changing the "1.9 parts of a hydrophobic substance {magnesium stearate}" to "0.27 parts of a hydrophobic substance {Sylophobic 200, produced by Fuji Silysia Chemical Ltd., oil absorption: 207 g/100 g}." The absorbent resin particles (16) had a weight average particle diameter of 344 μm and an apparent density of 0.57 g/ml. It was found that the hydrophobic substance (C) was present inside the absorbent resin particles in an amount of 0.96% and the hydrophobic substance (C) was present on the surface of the absorbent resin particles in an amount of 0.04%.

<Example 17>

Absorbent resin particles (17) of the present invention were obtained in the same manner as in Example 1, except for changing the "1.9 parts of a hydrophobic substance {magnesium stearate}" to "0.27 parts of a hydrophobic substance {Kaolin ASP (produced by BASF Catalysts LLC), oil absorption: 51 g/100 g}." The absorbent resin particles (17) had a weight average particle diameter of 45 μm and an apparent density of 0.70 g/ml. It was found that the hydrophobic substance (C) was present inside the absorbent resin particles in an amount of 0.96% and the hydrophobic substance (C) was present on the surface of the absorbent resin particles in an amount of 0.04%.

<Example 18>

• Preparing step

145.4 parts of acrylic acid was diluted with 9.4 parts of water and then neutralized by the addition of 242.3 parts of a 25% by weight aqueous solution of sodium hydroxide under cooling at 20 to 30°C. To this solution were dissolved homogeneously 0.09 parts of ethylene glycol diglycidyl ether (DENACOL EX-810, produced by Nagase Chemicals Ltd.), 0.0146 parts of sodium hypophosphite monohydrate, and potassium persulfate, and then 1.45 parts of a hydrophobic substance {magnesium stearate, particle diameter: about 1 mm} was added, so that an aqueous monomer solution (1) was obtained.
Subsequently, 624 parts of cyclohexane was put into a reaction vessel equipped with a stirrer, a reflux condenser, a thermometer, and a nitrogen gas inlet tube and then 2.00 parts of sorbitan monostearate was added thereto and dissolved, followed by replacing the atmosphere with nitrogen under stirring.

• Step (1)

Subsequently, the content of the reaction vessel was heated to 70°C and then 397 parts of the aqueous monomer solution (1) was added dropwise at a rate of 6.6 parts/minute over 60 minutes while maintaining the temperature at 70°C. Then, the mixture was ripened at 75°C for 30 minutes, so that an aqueous solution containing an absorbent resin precursor (1) was obtained.

• Step (2)

Then, water and cyclohexane were removed from the aqueous solution containing the absorbent resin precursor (1) by azeotropic distillation until the water content became about 20% by weight (measured at 180°C in 20 minutes using an infrared moisture content meter (type FD-100 manufactured by Kett)). Since resin particles sedimented upon cooling down to 30°C and stopping stirring, the resin particles were separated from cyclohexane by decantation. The resin particles were dried at 110°C until the water content of the resin particles became 20% by weight or less. To 80 parts of the resin particles was sprayed 0.013 parts of a 1% by weight aqueous solution of ethylene glycol diglycidyl ether (DENACOL EX-810, produced by Nagase Chemicals Ltd.), followed by execution of a surface-crosslinking reaction at 80°C for 1 hour. Then, the resin particles were further dried at 110°C, so that a powdery absorbent resin was obtained. The powdery absorbent resin particles were adjusted to have a particles size of 300 $\mu$m or smaller by using a 300 $\mu$m sieve. To 40 parts of the absorbent resin particles after the adjustment was added 0.012 parts of a hydrophobic substance {magnesium stearate, particle diameter: about 1 mm}, so that absorbent resin particles (18) of the present invention were obtained. The absorbent resin particles (18) had a weight average particle diameter of 170 $\mu$m and an apparent density of 0.66 g/ml. It was found that the hydrophobic substance (C) was present inside the absorbent resin particles in an amount of 1.0% and the hydrophobic substance (C) was present on the surface of the absorbent resin particles in an amount of 0.02%.

Comparative Example 1

155 Parts of a water-soluble vinyl monomer {acrylic acid, produced by Mitsubishi Chemical Corporation}, 0.43 parts of a crosslinking agent {pentaerythritol triallyl ether, produced by Daiso Co., Ltd.}, and 415.69 parts of deionized water were kept at 3°C under stirring and mixing. After adjustment of a dissolved oxygen amount to 1 ppm or less by introduction of nitrogen into this mixture, 0 .62 parts of a 1% by weight aqueous solution of hydrogen peroxide, 1.16 parts of a 2% by weight aqueous solution of ascorbic acid, 0.23 parts of 0.1% by weight iron sulfate heptahydrate, and 1.55 parts of a 10% by weight aqueous solution of 2,2'-azobis[2-methylpropionamidine] dihydrochloride were added and mixed, so that polymerization was initiated. After the temperature of the mixture reached 90°C, polymerization was performed at 90 $\pm$ 2°C for about 5 hours, thereby obtaining a hydrous gel (1').
Then, while chopping 578.60 parts of the hydrous gel (1') with a mincing machine (12VR-400K, manufactured by ROYAL), 124.28 parts of a 48.5% aqueous solution of sodium hydroxide was added and mixed, and subsequently 38 parts of a hydrophobic substance {magnesium stearate, particle diameter: about 1mm} was added and mixed, so that a chopped gel (2') was obtained. Moreover, the chopped gel (2') was dried in a through-flow band dryer {at 150°C, wind speed: 2 m/second}, so that a dried material was obtained. The dried powder was pulverized with a juicing blender (OSTERIZER BLENDER manufactured by Oster) and then was adjusted to have particle sizes of 300 $\mu$m or smaller by using a 300 $\mu$m sieve, so that absorbent resin particles (H1) having a weight average particle diameter of 170 $\mu$m were obtained. The apparent density of the absorbent resin particles (H1) was 0.65 g/ml. It was found that the hydrophobic substance (C) was present inside the absorbent resin particles in an amount of 19.4% and the hydrophobic substance (C) was present on the surface of the absorbent resin particles in an amount of 1.7%.

Comparative Example 2

Absorbent resin particles (H2) were obtained in the same manner as in Comparative Example 1, except for failing to add "38 parts of a hydrophobic substance {magnesium stearate}." The absorbent resin particles (H2) had a weight average particle diameter of 180 μm and an apparent density of 0.63 g/ml. It was found that no hydrophobic substance (C) was present inside the absorbent resin particles and no hydrophobic substance (C) was present on the surface of the absorbent resin particles.

Comparative Example 3

Absorbent resin particles (H3) were obtained in the same manner as in Comparative Example 1 except for failing to add "38 parts of a hydrophobic substance {magnesium stearate}" and modifying "the dried powder was pulverized with a juicing blender (OSTERIZER BLENDER manufactured by Oster) and then was adjusted to have particle sizes of 300 μm or smaller by using a 300 μm sieve" to "the dried powder was pulverized with a centrifuge (Ultra Centrifugal Mill ZM 200 manufactured by Nihonseiki Kaisha Ltd.) and then was adjusted to have particle sizes of 106 μm or smaller by using a 106 μm sieve." The absorbent resin particles (H3) had a weight average particle diameter of 45 μm and an apparent density of 0.70 g/ml. It was found that no hydrophobic substance (C) was present inside the absorbent resin particles and no hydrophobic substance (C) was present on the surface of the absorbent resin particles.

Comparative Example 4

Absorbent resin particles (H4) were obtained in the same manner as in Comparative Example 1 except for failing to add "38 parts of a hydrophobic substance {magnesium stearate}" and adding "while stirring 100 parts of the dried material particles at high speed (by using "High-speed stirring turbulizer" manufactured by Hosokawa Micron Co., rate of revolution: 2000 rpm), adding 3 parts of a 2% ethylene glycol diglycidyl ether solution in water/methanol mixture (weight ratio of water/methanol = 70/30) by spraying, followed by mixing, and then performing surface-crosslinking by leaving the mixture at rest at 150°C for 30 minutes." The absorbent resin particles (H4) had a weight average particle diameter of 300 μm and an apparent density of 0.60 g/ml. It was found that no hydrophobic substance (C) was present inside the absorbent resin particles and no hydrophobic substance (C) was present on the surface of the absorbent resin particles.

For the absorbent resin particles (1) through (18) obtained in Examples 1 through 18 and the absorbent resin particles (H1) through (H4) obtained in Comparative Examples 1 through 4, a weight mean particle diameter, an apparent density, a water capacity, and an absorption rate were measured. The results are shown in Table 1.

[Table 1]

| | | Absorbent resin particle | Amount of hydrophobic substance (C) | | Hydrophobic substance (C) | | | | Weight average particle diameter | Apparent density | Water capacity | Absorption rate |
|---|---|---|---|---|---|---|---|---|---|---|---|---|
| | | | Inside | Surface | Contact angle | Viscosity | Oil absorption | SP value | | | | |
| | | | (%) | (%) | (°) | (Pa·s) | (g/100 g) | – | (μm) | (g/g) | (g/g) | (g/g/s) |
| Example | 1 | (1) | 0.92 | 0.08 | 45 | 9 | 48 | – | 170 | 0.66 | 33 | 10.0 |
| | 2 | (2) | 0.96 | 0.04 | 30 | 0.007 | 51 | – | 170 | 0.66 | 33 | 9.3 |
| | 3 | (3) | 0.01 | 0.10 | 45 | 9 | 48 | – | 170 | 0.67 | 33 | 9.6 |
| | 4 | (4) | 10.0 | 1.0 | 45 | 9 | 48 | – | 170 | 0.65 | 30 | 7.1 |
| | 5 | (5) | 0.01 | 0.001 | 45 | 9 | 48 | – | 170 | 0.67 | 33 | 7.6 |
| | 6 | (6) | 1.0 | 0.10 | 20 | – | 156 | – | 170 | 0.66 | 33 | 7.6 |
| | 7 | (7) | 0.96 | 0.04 | 20 | – | 156 | – | 170 | 0.66 | 33 | 7.8 |
| | 8 | (8) | 0.98 | 0.02 | 10 | – | 156 | – | 170 | 0.66 | 33 | 6.3 |
| | 9 | (9) | 1.0 | 0.10 | 10 | – | 156 | – | 170 | 0.66 | 33 | 5.2 |
| | 10 | (10) | 1.0 | 0.10 | 115 | – | 57 | – | 170 | 0.66 | 33 | 5.3 |
| | 11 | (11) | 0.96 | 0.04 | 115 | – | 57 | 6.2 | 296 | 0.61 | 42 | 8.9 |
| | 12 | (12) | 0.96 | 0.04 | – | – | – | 16.0 | 316 | 0.58 | 46 | 10.4 |
| | 13 | (13) | 0.96 | 0.04 | – | – | – | 9.4 | 254 | 0.58 | 43 | 16.8 |
| | 14 | (14) | 0.96 | 0.04 | 60 | – | 51 | – | 310 | 0.60 | 43 | 9.3 |
| | 15 | (15) | 0.96 | 0.04 | 10 | – | 438 | – | 326 | 0.59 | 42 | 11.9 |
| | 16 | (16) | 0.96 | 0.04 | 120 | – | 207 | – | 344 | 0.57 | 43 | 12.3 |
| | 17 | (17) | 0.96 | 0.04 | 60 | – | 51 | – | 45 | 0.70 | 43 | 18.6 |
| | 18 | (18) | 1.0 | 0.02 | 45 | 9 | 48 | – | 170 | 0.66 | 33 | 6.6 |
| Comparative Example | 1 | (H1) | 19.4 | 1.7 | 45 | 9 | 48 | – | 170 | 0.65 | 26 | 4.2 |
| | 2 | (H2) | 0.0 | 0.00 | – | – | – | – | 180 | 0.63 | 32 | 4.5 |
| | 3 | (H3) | 0.0 | 0.00 | – | – | – | – | 45 | 0.70 | 43 | 4.2 |
| | 4 | (H4) | 0.0 | 0.00 | – | – | – | – | 300 | 0.60 | 43 | 8.0 |

19

For the absorbent resin particles (1) through (18) obtained in Examples 1 through 18 and the absorbent resin particles (H1) through (H4) obtained in Comparative Examples 1 through 4, the particle size distribution was measured. The results are shown in Table 2. The method of measuring the particle size distribution is as follows.

<Method of measuring the particle size distributions

The particle size distribution was measured in accordance with JIS Z8815-1994. Sieves 150 mm in inner diameter and 45 mm in depth {opening size: 710 $\mu$m, 500 $\mu$m, 300 $\mu$m, 150 $\mu$m, and 106 $\mu$m} were plied one on another with a sieve smaller in opening size placed at a lower position. Then, 50 g of a measurement sample was put on the top sieve that was the largest in opening size, i.e., 710 $\mu$m, and was shaken for 10 minutes by a sieve shaker. Subsequently, the measurement sample remaining on each sieve was weighed and the percentage by weight of the measurement sample remaining on each sieve based on the weight of the initial measurement sample was calculated, so that the particle size distribution was determined.

[Table 2]

| | | Absorbent resin particles | Particle size distribution (%) | | | | | |
|---|---|---|---|---|---|---|---|---|
| | | | 500 $\mu$m or more | 500 to 300 $\mu$m | 300 to 250 $\mu$m | 250 to 150 $\mu$m | 150 to 106 $\mu$m | 106 $\mu$m or less |
| Example | 1 | (1) | 0.0 | 0.0 | 5.0 | 50.0 | 20.0 | 25.0 |
| | 2 | (2) | 0.0 | 0.0 | 5.0 | 50.0 | 20.0 | 25.0 |
| | 3 | (3) | 0.0 | 0.0 | 5.0 | 50.0 | 20.0 | 25.0 |
| | 4 | (4) | 0.0 | 0.0 | 5.0 | 50.0 | 20.0 | 25.0 |
| | 5 | (5) | 0.0 | 0.0 | 5.0 | 50.0 | 20.0 | 25.0 |
| | 6 | (6) | 0.0 | 0.0 | 5.0 | 50.0 | 20.0 | 25.0 |
| | 7 | (7) | 0.0 | 0.0 | 5.0 | 50.0 | 20.0 | 25.0 |
| | 8 | (8) | 0.0 | 0.0 | 5.0 | 50.0 | 20.0 | 25.0 |
| | 9 | (9) | 0.0 | 0.0 | 5.0 | 50.0 | 20.0 | 25.0 |
| | 10 | (10) | 0.0 | 0.0 | 5.0 | 50.0 | 20.0 | 25.0 |
| | 11 | (11) | 5.0 | 38.4 | 10 | 16.0 | 7.5 | 23.1 |
| | 12 | (12) | 6.8 | 37.1 | 9.0 | 16.3 | 8.6 | 22.2 |
| | 13 | (13) | 2.8 | 28.6 | 10.8 | 17.9 | 10.5 | 29.4 |
| | 14 | (14) | 5.9 | 37.2 | 10.2 | 15.ml | 7.9 | 22.8 |
| | 15 | (15) | 5.0 | 38.6 | 10.9 | 15.0 | 8.1 | 22.4 |
| | 16 | (16) | 5.9 | 38.1 | 10.5 | 14 .4 | 7.5 | 23.6 |
| | 17 | (17) | 0.0 | 0.0 | 0.0 | 0.0 | 0.0 | 100.0 |
| | 18 | (18) | 0.0 | 0.0 | 5.0 | 50.0 | 20.0 | 25.0 |
| Comparative Example | 1 | (H1) | 0.0 | 0.0 | 5.0 | 50.0 | 20.0 | 25.0 |
| | 2 | (H2) | 0.0 | 0.0 | 5.0 | 60.0 | 10.0 | 25.0 |
| | 3 | (H3) | 0.0 | 0.0 | 0.0 | 0.0 | 0.0 | 100.0 |
| | 4 | (H4) | 5.9 | 37.2 | 10.2 | 16.0 | 7.9 | 22 8 |

Examples 19 to 36

Using the absorbent resin particles (1) to (18) obtained in Examples 1 to 18, water-stopping tapes (1) to (18) were prepared by the following method.
Paints were each obtained by compounding 29.0 g of a rein for urethane-based paints [polyester-based urethane resin, commercial name: SANPRENE IB-1700D, produced by Sanyo Chemical Industries, Ltd.], 1.0 g of dibutyltin dilaurate, 60.0 g of one of the absorbent resin particles (1) through (18) obtained in Examples 1 through 18, and 10.0 g of methyl ethyl ketone, followed by heating and mixing at 70°C for 3 hours. Each of the paints was applied to a supporting substrate, i.e., polyester-based nonwoven fabric [basis weight: 40 g/m$^2$; produced by Toray Industries, Inc.] by a bar coater and then dried at 105°C for 3 minutes, thereby obtaining water-stopping tapes (1) through (18) with a coat having a solid content of 45 g/m$^2$ and a thickness of 450 $\mu$m.

Comparative Examples 5 to 8

Water-stopping tapes (H1) through (H4) were obtained in the same manner as in Example 18 except for using absorbent resin particles (H1) through (H4) instead of the absorbent resin particles (1) in Example 18.
The absorption rates of the water-stopping tapes (1) through (18) produced in Examples 19 through 36 and the water-stopping tapes (H1) through (H4) produced in Comparative Examples 5 through 8 were evaluated. The evaluated results are shown in Table 3. The method of evaluating the absorption rate of a water-stopping tape is as follows .

<Method of evaluating the absorption rate (sec) of a water-stopping tape>

A water-stopping tape was cut into a size of 10 cm x 10 cm, thereby obtaining a test sample . The sample was placed on a horizontal table with its side coated with absorbent resins particles facing upward, and then 50 ml of ion exchange water was dropped from a dropping funnel to a nearly central region of the sample from a height of 2 cm within 5 seconds. The time between the commencement of the dropping and the completion of absorption of the whole amount of ion exchange water {sheet water absorption rate (s)} was measured. Regarding the sheet water absorption rate, it is meant that the smaller the value thereof, the higher the absorption rate. The water-stopping tape and the ion exchange water to be used for the measurement were temperature-controlled at 23°C for 24 hours. The measurement was carried out under an atmosphere with a temperature of 23°C.
[Table 3]

| | | Water-stropping tape | Sheet water absorption rate (s) |
|---|---|---|---|
| Example | 19 | (1) | 16.7 |
| | 20 | (2) | 18.0 |
| | 21 | (3) | 17.3 |
| | 22 | (4) | 23.3 |
| | 23 | (5) | 22.0 |
| | 24 | (6) | 22.0 |
| | 25 | (7) | 21.3 |
| | 26 | (8) | 26.7 |
| | 27 | (9) | 32.0 |
| | 28 | (10) | 31.3 |
| | 29 | (11) | 18.8 |
| | 30 | (12) | 16.1 |
| | 31 | (13) | 9.9 |
| | 32 | (14) | 18.0 |
| | 33 | (15) | 14.0 |
| | 34 | (16) | 13.6 |
| | 35 | (17) | 9.0 |
| | 36 | (18) | 25.1 |

(continued)

|  |  | Water-stropping tape | Sheet water absorption rate (s) |
|---|---|---|---|
| Comparative Example | 5 | (H1) | 40.0 |
|  | 6 | (H2) | 36.7 |
|  | 7 | (H3) | 40.0 |
|  | 8 | (H4) | 20.9 |

Table 1 shows that absorbent resin particles (1) through (10) and (17) for water-stopping tapes are greater in absorption rate (g/g/s) and therefore superior in absorption rate as compared to (H1), which is equal in weight average particle diameter. Especially, (17), which is smaller in weight average particle diameter, has an absorption rate of 18. 6, which is far higher than the absorption rate of 4.2 of (H3), which is equal in weight average particle diameter. This shows that (17) is extremely superior in absorption rate.

In Table 2, absorbent resin particles (10) for a water-stopping tape, which have a broader particle size distribution, are higher in absorption rate than particles (H4), which are equal in particle size distribution. This shows that cases of a wide particle size distribution are also superior in absorption rate.

Moreover, Table 3 shows that the water-stopping tapes of examples are lower in sheet water absorption rate (s) as compared to the water-stopping tapes of comparative examples comparable in weight average particle diameter and have good absorption rates. That is, the water-stopping tapes of examples can quickly absorb water, sea water, and the like having entered into cables and the like and thereby can prevent the degradation of the inside of the cables and the like and thus they can demonstrate high performance as water-stopping tapes.

INDUSTRIAL APPLICABILITY

The absorbent resin particles for a water-stopping tape of the present invention are high in absorption rate of water, sea water, and the like. In addition, the absorbent resin particles for a water-stopping tape of the present invention are superior in absorption rate even if they are smaller in average particle size or broader in particle size distribution. Moreover, a water-stopping tape containing the absorbent resin particles for a water-stopping tape of the present invention is superior in absorption rate and can quickly absorb water, sea water, and the like having entered into cables and the like and thereby can prevent the degradation of the inside of the cables and the like.

**Claims**

1. Absorbent resin particles for a water-stopping tape comprising a crosslinked polymer (A1) comprising a water-soluble vinyl monomer (a1) and/or a hydrolyzable vinyl monomer (a2) and a crosslinking agent (b) as essential constitutional units, wherein a hydrophobia substance (C) is present inside the absorbent resin particles in an amount of from 0.01 to 10.0% by weight relative to the weight of (A1) and (C) is present on the surface of the absorbent resin particles in an amount of from 0.001 to 1.0% by weight relative to the weight of (A1).

2. The absorbent resin particles for a water-stopping tape according to claim 1, wherein the SP value of the hydrophobic substance (C) is from 6.0 to 16.0.

3. The absorbent resin particles for a water-stopping tape according to claim 1 or 2, wherein the oil absorption of the hydrophobic substance (C) is from 40 to 450 g/100 g.

4. The absorbent resin particles for a water-stopping tape according to any one of claims 1 to 3, wherein the viscosity of the hydrophobic substance (C) at 150°C is 20 Pa·s or less.

5. The absorbent resin particles for a water-stopping tape according to any one of claims 1 to 4, wherein the contact angle of the hydrophobic substance (C) with physiological saline is from 20° to 60°.

6. The absorbent resin particles for a water-stopping tape according to any one of claims 1 to 5, wherein the weight average particle diameter thereof is from 10 $\mu$m to 800 $\mu$m.

7. The absorbent resin particles for a water-stopping tape according to any one of claims 1 to 6, wherein the shape of the absorbent resin particles is an irregularly pulverized shape.

8. A water-stopping tape comprising the absorbent resin particles for a water-stopping tape according to any one of claims 1 to 7.

**INTERNATIONAL SEARCH REPORT**

| International application No. |
|---|
| PCT/JP2010/006051 |

A.  CLASSIFICATION OF SUBJECT MATTER
*C09K3/10*(2006.01)i, *C08F2/44*(2006.01)i, *C08J3/12*(2006.01)i, *C08L101/14* (2006.01)i, *G02B6/44*(2006.01)i, *H02G3/22*(2006.01)i

According to International Patent Classification (IPC) or to both national classification and IPC

B.  FIELDS SEARCHED

Minimum documentation searched (classification system followed by classification symbols)
C08F2/00-2/60, C08J3/00-3/28, C08K3/00-13/08, C08L1/00-101/14, C09J7/00-7/04, C09K3/10-3/12, G02B6/44, H02G3/22, H02G9/00-9/12

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2007-212858 A  (Fukuoka Cloth Industry Co., Ltd.),<br>23 August 2007 (23.08.2007),<br>claims 1 to 4; paragraphs [0019] to [0020], [0024] to [0028]<br>(Family: none) | 1-6,8<br>7 |
| X<br>Y<br>A | JP 08-283697 A  (Nippon Shokubai Co., Ltd.),<br>29 October 1996 (29.10.1996),<br>claims 1 to 4; paragraphs [0035] to [0048]<br>(Family: none) | 1,3-8<br>7<br>2 |
| X<br>Y<br>A | JP 2000-322947 A  (Nippon Shokubai Co., Ltd.),<br>24 November 2000 (24.11.2000),<br>claims 1 to 8; paragraphs [0038] to [0046]<br>(Family: none) | 1,3-6,8<br>7<br>2 |

☒   Further documents are listed in the continuation of Box C.          ☐   See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02 November, 2010 (02.11.10) | 16 November, 2010 (16.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/006051

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2006-143972 A  (Nippon Shokubai Co., Ltd.), 08 June 2006 (08.06.2006), entire text (Family: none) | 1-8 |
| A | JP 2000-026510 A  (Sanyo Chemical Industries, Ltd.), 25 January 2000 (25.01.2000), claims; paragraphs [0033] to [0039], [0060] (Family: none) | 1-8 |
| A | JP 2002-265929 A  (The Fujikura Rubber Ltd.), 18 September 2002 (18.09.2002), claims; paragraphs [0022], [0026] to [0027], [0035] (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 51125468 A
- JP 62172006 A
- JP 2002030270 A
- JP 3648553 B
- JP 2003165883 A
- JP 2005075982 A
- JP 2005095759 A
- JP 55133413 A
- JP 54030710 B
- JP 56026909 A

- JP 1005808 A
- JP 59189103 A
- JP 58180233 A
- JP 61016903 A
- JP 61211305 A
- JP 61252212 A
- JP 51136588 A
- JP 61257235 A
- JP 2003225565 A
- JP 2006131767 A
- JP 8283697 A
- JP 9297248 A

### Non-patent literature cited in the description

- Perry's Chemical Engineers' Handbook. McGraw-Hill Book Company, 1984, 21
- **Takehiko FUJIMOTO.** SHIN-KAIMEN KASSEIZAI NYUMON. Sanyo Chemical Industries, Ltd, 1981, 197

- **ROBERT F. FEDORAS.** *POLYMER ENGINEERING AND SCIENCE,* February 1974, vol. 14, 151-153
- **ROBERT F, FEDORS.** *POLYMER ENGINEERING AND SCIENCE,* June 1974, vol. 14 (6), 472